# EUROPEAN PATENT APPLICATION

(11) **EP 2 309 666 A2**
(43) Date of publication of application: **13.04.2011**
(21) Application number: 10186486.6
(22) Date of filing: 05.10.2010
(51) Int. Cl.: H04J 14/02, H04Q 11/00, H04J 3/16

(54) **Communication device and downstream resource allocation method**

(30) Priority: 09.10.2009 JP 2009235178
(71) Applicant: NEC Corporation, Minato-ku Tokyo 108-8001 (JP)
(72) Inventor: Ozaki, Hirokazu, Tokyo 108-8001 (JP)
(74) Representative: Vossius & Partner

(57) **Abstract**

A communication device which communicates with a plurality of subscriber communication devices using optical signals of a plurality of wavelengths, includes: a traffic monitoring section for monitoring a downstream traffic volume of a downstream signal destined for each of the plurality of subscriber communication devices; and a resource allocating section for allocating a different one of a predetermined number of wavelength resources to each of groups which includes at least one downstream signal grouped according to a predetermined wavelength allocation rule based on its downstream traffic volume.

## Description

This application is based upon and claims the benefit of priority from Japanese Patent Application No. 2009-235178, filed on October 9, 2009, the disclosure of which is incorporated herein in its entirety by reference.

The present invention relates to a point-to-multipoint optical communications system and, more particularly, to a communication device transmitting downstream signals to a plurality of subscriber communication devices and a method for allocating communication resources to downstream signals.

In recent years, the deployment of broadband access links is promoted due to the progress of the Internet. For broadband access links, various systems such as ADSL and cable modems have already been put to practical use. However, to still broaden the bandwidth, passive optical network (PON) attracts attentions and is becoming prevalent worldwide. Recently, PON systems with gigabit-class interface speed are in practical use.

A PON system is a point-to-multipoint system configured in such a manner that a plurality of optical network units (ONUs) are connected to an optical line terminator (OLT) through optical fibers (optical transmission lines) and optical splitter(s). The OLT is a communication device installed in a central office, and the ONUs are subscriber communication devices installed in end users' premises. It is also possible to connect a plurality of optical splitters in multiple stages if branches are made to a large number of ONUs.

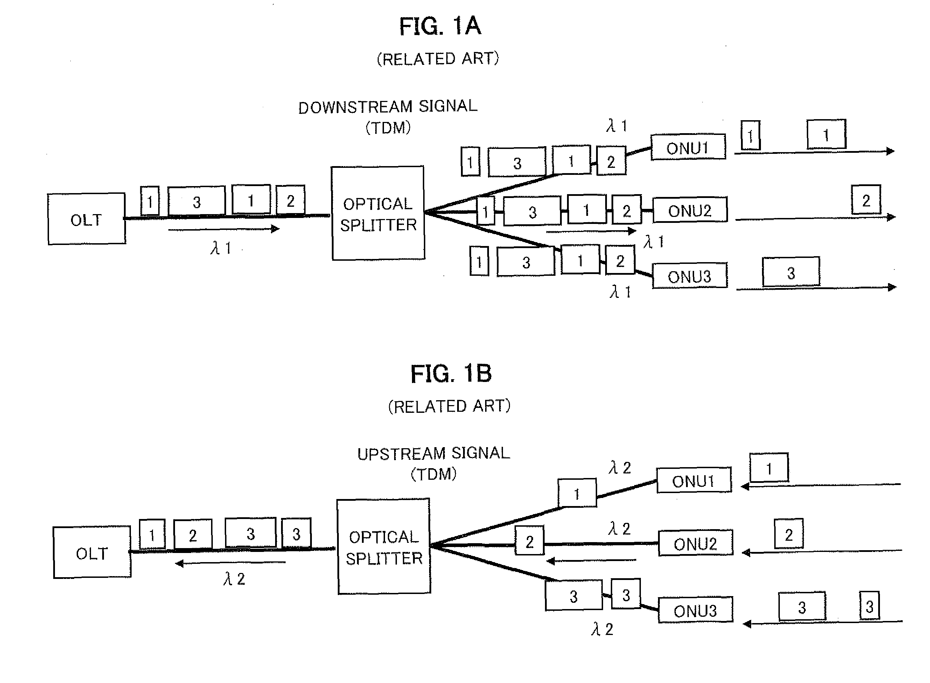

FIGS. 1A and 1B depict an example of the basic architecture of a PON system using time division multiplexing (TDM PON), showing downstream signals and upstream signals, respectively. Shown here are the flows of the signals in the PON system in which one OLT and three ONUs are connected. Each user's personal computer is connected to a network through the ONU and further connected to an upper network and the Internet through the OLT. Since the upstream signal (with a wavelength of 1.3 µm usually) and downstream signal (with a wavelength of 1.5 µm usually) are wavelength-multiplexed, the connection between the OLT and ONU is made through a bidirectional single-core optical fiber.

Referring to FIG. 1A, a downstream signal is broadcast from the OLT to all ONUs, and each ONU checks the destinations of frames and takes in a frame destined for itself. Referring to FIG. 1B, upstream signals from the individual ONUs join together at an optical splitter. In this event, a time division multiplexing access scheme is used to avoid signal collisions. To this end, the OLT arbitrates output requests (REPORT messages) momently reported from the individual ONUs and gives signal transmission grants (GATE messages) to the individual ONUs after calculating transmission delays based on the respective distances between the OLT and ONUs.

A REPORT message contains information on the queue status (queue length) of the buffer provided in the ONU originating the REPORT message. A GATE message contains information on a transmission start time and transmission duration, which are set for each signal priority. Each ONU transmits an upstream signal in accordance with the GATE information. That is, upstream bandwidth allocation is implemented as the allocation of timeslots.

In FIGS. 1A and 1B, numbered rectangles represent signal frames destined for and transmitted from the individual ONUs. Incidentally, since the distances between the OLT and individual ONUs are different from each other, it is necessary that the length of time required for a signal to make a round trip between the OLT and each ONU be calculated at the time of start up, in order for the OLT to give accurate signal transmission grants. Such a discovery operation is called initialization of PON system.

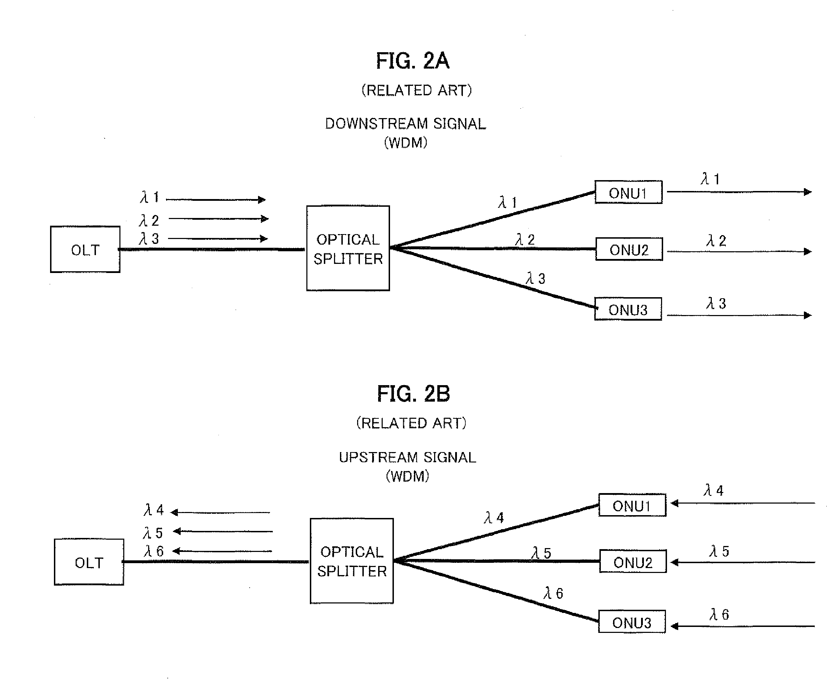

FIGS. 2A and 2B depict an example of the basic architecture of a PON system using wavelength division multiplexing (WDM PON). Different wavelengths are allocated to the upstream and downstream for each ONU, whereby the OLT and each ONU can always communicate. The use of TDM is not necessary. FIG. 2A shows downstream signals, and FIG. 2B shows upstream signals. Research and development is being conducted on WDM PON as means for realizing ultrahigh capacity communication in the future.

However, there are many problems to be solved, such as arbitration and stabilization of wavelengths and reduction in cost, and it is difficult to realize a system in which individual wavelengths are allocated to all ONUs respectively. Therefore, systems combining technologies of TDM PON and WDM PON have been also proposed as a promising solution.

For example, Japanese Patent Application Unexamined Publication No. 2008-42525 (hereafter, referred to as JP2008-42525) discloses an example of an optical transmission system combining TDM and WDM. In this system, an OLT designates the wavelength, transmission timing, and transmission period of an upstream signal of each ONU. More specifically, ONUs are divided into groups corresponding to upstream wavelengths to be used by the ONUs. The OLT buffers and monitors upstream data received from each ONU. If the bandwidth to be reserved for an upstream signal of a certain ONU cannot be secured in its current wavelength group, the OLT performs such wavelength allocation as to relocate the signal in question into another upstream wavelength group having a smaller number of signals.

In the same upstream wavelength group, the OLT appropriately changes the allocation of timeslots in TDM, whereby the capacity (bandwidth) of communication with each ONU can be optimized on the time axis based on requests. Particularly in the upstream direction (from ONU to OLT), arbitration is performed in real time by dynamic bandwidth allocation (DBA).

However, a downstream signal transmitted from the OLT to each ONU generally requires a wider bandwidth than an upstream signal transmitted from each ONU to the OLT in many cases. If a large number of downstream signals are time-division-multiplexed on a specific one of a plurality of downstream wavelengths, efficient bandwidth allocation in a network cannot be achieved.

In the above-described optical transmission system disclosed in JP2008-42525, determined is a wavelength to be used for an upstream signal transmitted from each ONU, not a wavelength to be used for a downstream signal transmitted from the OLT to each ONU. Accordingly, it is impossible to achieve efficient bandwidth allocation (maximum throughput) in the entire system.

The present invention is made in the light of the above-described situations, and an object thereof is to provide a communication device and a resource allocation method that enable optimal resource allocation over a plurality of wavelengths for downstream signals.

According to the present invention, a communication device for communicating with a plurality of subscriber communication devices using optical signals of a plurality of wavelengths, includes: a traffic monitoring section for monitoring a downstream traffic volume of a downstream signal destined for each of the plurality of subscriber communication devices; and a resource allocating section for allocating a different one of a predetermined number of wavelength resources to each of groups which includes at least one downstream signal grouped according to a predetermined wavelength allocation rule based on its downstream traffic volume.

According to the present invention, a method for allocating communication resources to a downstream signal in a communication device which communicates with a plurality of subscriber communication devices using optical signals of a plurality of wavelengths, includes the steps of: monitoring a downstream traffic volume of a downstream signal destined for each of the plurality of subscriber communication devices; and grouping the downstream signals under a predetermined number of wavelength resources according to a predetermined wavelength allocation rule based on their downstream traffic volumes; and allocating a different one of the predetermined number of wavelength resources to each of groups.

As described above, according to the present invention, it is possible to perform optimal resource allocation over a plurality of wavelengths for downstream signals.
FIG. 1A is a diagram depicting a general PON system using time division multiplexing (TDM), showing downstream signals.
FIG. 1B is a diagram depicting the general PON system using TDM, showing upstream signals.
FIG. 2A is a diagram depicting a general PON system using wavelength division multiplexing (WDM), showing downstream signals.
FIG. 2B is a diagram depicting the general PON system using WDM, showing upstream signals.
FIG. 3 is a system architecture diagram showing the architecture of a PON system that is an optical communications system according to an exemplary embodiment of the present invention.
FIG. 4 is a block diagram showing the configuration of a transmission section of an OLT in the PON system shown in FIG. 3.
FIG. 5 is a block diagram showing the configuration of an ONU in the PON system shown in FIG. 3.
FIG. 6 is a system architecture diagram showing an example of wavelength grouping in a PON system according to an example of the present invention.
FIG. 7 is a system architecture diagram showing another example of wavelength grouping in the PON system according to the present example of the present invention.
FIG. 8 is a block diagram showing the configuration of an OLT according to the present example in the case of wavelength grouping shown in FIG. 7.
FIG. 9 is a block diagram showing a first example of an ONU according to the present example.
FIG. 10A is a diagram showing an example of downstream frames in the example of wavelength grouping shown in FIG. 7.
FIG. 10B is a diagram showing an example of upstream frames in the example of wavelength grouping shown in FIG. 7.
FIG. 11A is a diagram showing an example of downstream frames in the example of wavelength grouping shown in FIG. 6.
FIG. 11B is a diagram showing an example of upstream frames in the example of wavelength grouping shown in FIG. 6.
FIG. 12 is a block diagram showing a second example of the ONU according to the present example.

Next, a detailed description will be given of an exemplary embodiment in which an optical communications system including a communication device according to the present invention and a plurality of subscriber communication devices is applied to a passive optical network (PON) system, with reference to the accompanying drawings.

### 1. Exemplary embodiment

### 1.1) System

A PON system according to the present exemplary embodiment combines technologies of wavelength division multiplexing (WDM) and time division multiplexing (TDM) to realize efficient bandwidth allocation (maximum throughput). More specifically, the PON system controls the allocation of resources (wavelength and time) to upstream signals depending on bandwidth requests received from individual subscriber ONUs. In addition, the PON system dynamically changes the allocation of resources (wavelength and time) to downstream signals depending on the state of the downstream traffic band. In other words, dynamic bandwidth allocation (DBA) used in existing PON systems is extended not only to the time axis but also to the wavelength domain, whereby it is possible to perform more flexible and efficient bandwidth allocation.

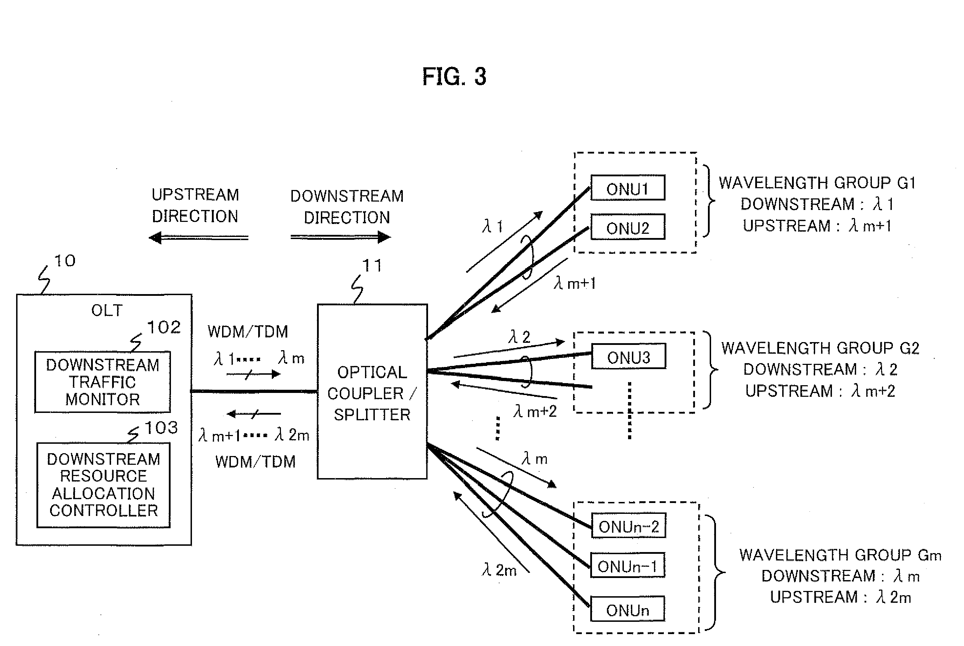

Referring to FIG. 3, the PON system according to the present exemplary embodiment has architecture in which a communication device 10 (hereinafter, referred to as OLT 10) is connected through an optical transmission line to an optical coupler/splitter 11, which is further connected through optical transmission lines to n (n is an integer not smaller than two) subscriber communication devices (hereinafter, referred to as ONUs) individually. Moreover, a total of 2m (m is an integer not smaller than two, and m < n) wavelengths are used in the present exemplary embodiment, with m wavelengths λ1 to λm provided for downstream signals and m wavelengths λm+1 to λ2m provided for upstream signals. The n ONUs are divided into m wavelength groups G1 to Gm in accordance with a subscriber allocation rule, which will be described later, and a pair of a downstream wavelength and an upstream wavelength is allocated to each group.

The OLT 10 has a downstream traffic monitor 102 and a downstream resource allocation controller 103 and performs wavelength allocation control for the n ONUs depending on downstream traffic transmitted to each ONU.

The optical coupler/splitter 11 is an element for splitting a downstream signal to each ONU and coupling an upstream signal from each ONU to transfer them to the OLT 10. Note that the optical coupler/splitter 11 may include an optical wavelength demultiplexing element that can separate the directions of downstream signals based on their wavelengths and also can optically combine upstream signals. For such an element, arrayed wavelength grating (AWG) is most commonly used.

In FIG. 3, for an example, two ONUs 1 and 2 are grouped into the wavelength group G1 (allocated the downstream wavelength λ1 and upstream wavelength λm+1), and three ONUs n-2, n-1, and n are grouped into the wavelength group Gm (allocated the downstream wavelength λm and upstream wavelength λ2m). Once an ONU is assigned a wavelength group, TDM is applied to upstream and downstream communications of the ONU on the respective wavelengths allocated to that group. For example, since the ONUs 1 and 2 are allocated the downstream wavelength λ1, the OLT 10 transmits downstream signals destined for the ONUs 1 and 2 in TDM scheme using this downstream wavelength λ1, whereby each ONU can receive the downstream signal destined for itself.

### 1.2) Communication device (OLT)

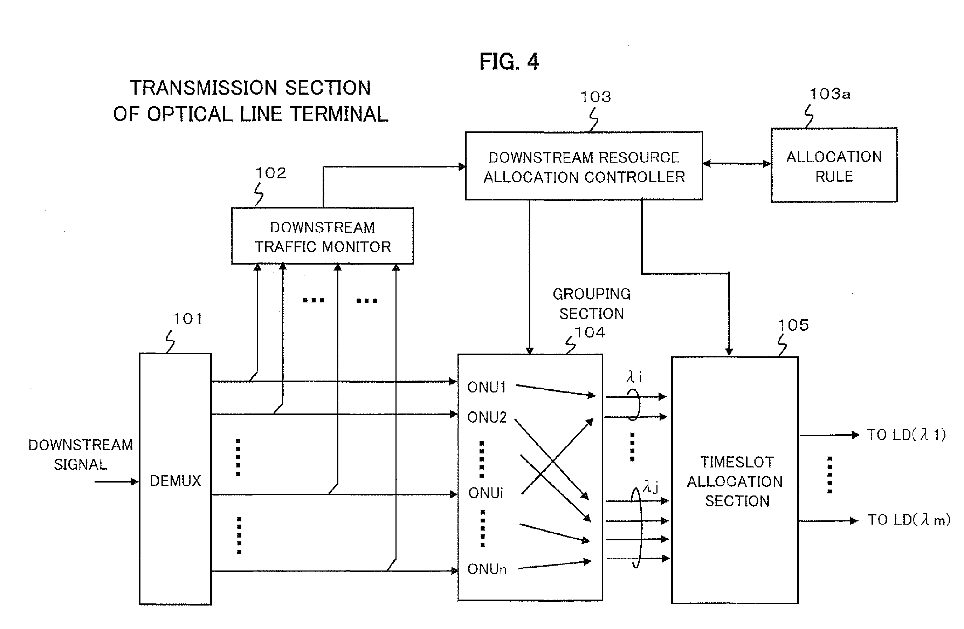

Referring to FIG. 4, a transmission section of the OLT 10 includes a demultiplexer (DEMUX) 101, the downstream traffic monitor 102, the downstream resource allocation controller 103, a grouping section 104, and a timeslot allocation section 105. The DEMUX 101 demultiplexes a downstream signal to transmit into n downstream signals corresponding to the signal destinations, ONUs 1 to n. The downstream traffic monitor 102 detects the traffic of the downstream signal for each ONU and outputs them to the downstream resource allocation controller 103.

The downstream resource allocation controller 103 determines the assignment of the wavelength groups to the ONUs 1 to n in accordance with an allocation rule 103a and outputs an allocation control signal indicating the determined assignment to the grouping section 104.

The allocation rule 103a is stored in memory, and the basic policy thereof is that for ONUs with lower downstream traffic volumes, the number of time-division multiplexed (TDMed) signals is increased by allocating the same wavelength to as many of these ONUs as possible and for ONUs with higher downstream traffic volumes, the number of TDMed signals is reduced so that as many timeslots as possible are allocated to these ONUs. For example, the allocation is performed in such a manner that ONUs are selected in descending order of downstream traffic volume and that as much traffic as possible is multiplexed on one downstream wavelength while held within the predetermined transmission bandwidth of the downstream wavelength.

The grouping section 104 sorts the n downstream signals corresponding to the ONUs 1 to n, which are input from the DEMUX 101, into the wavelength groups and outputs the downstream signals grouped by downstream wavelength to the timeslot allocation section 105. In FIG. 4, it is illustrated as an example that downstream signals destined for two ONUs are grouped to be allocated a downstream wavelength λi and downstream signals destined for four ONUs are grouped to be allocated a downstream wavelength λj.

The timeslot allocation section 105 time-division-multiplexes a plurality of the downstream signals of each downstream wavelength in accordance with a timeslot allocation control signal from the downstream resource allocation controller 103 and outputs the signals to laser light sources provided respectively for the individual wavelengths.

### 1.3) Subscriber communication device (ONU)

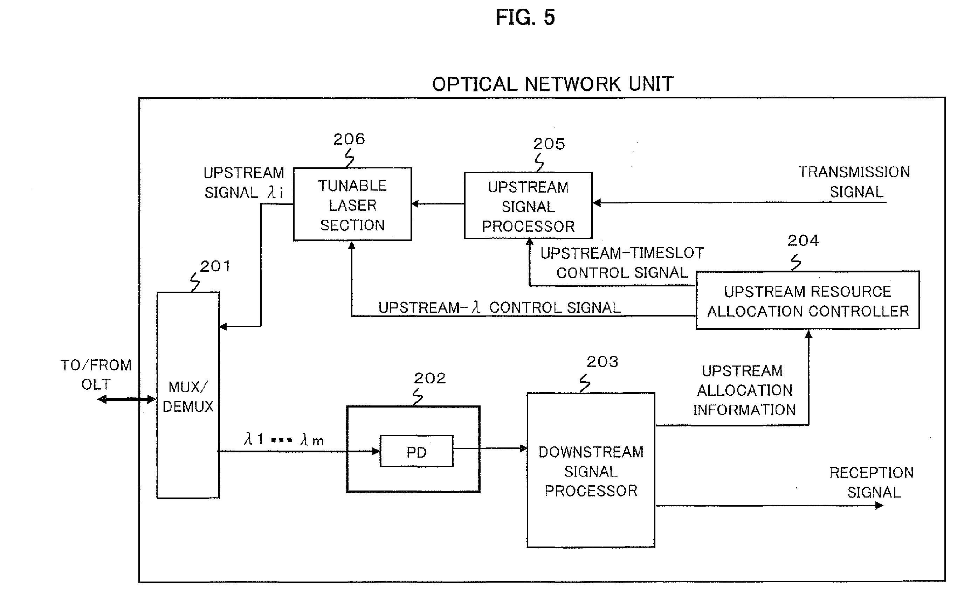

Referring to FIG. 5, each ONU has a similar functional configuration. Each ONU is provided, at an interface section interfacing with the optical transmission line connected to the optical coupler/splitter 11, with a wavelength multiplexer/demultiplexer (MUX/DEMUX) 201. The MUX/DEMUX 201 demultiplexes a downstream signal received from the OLT 10 into m wavelengths λ1 to λm. An optical detection section 202 is provided with a photodetector PD capable of receiving optical signals of wavelengths ranging from λ1 to λm and converts the wavelength-demultiplexed individual downstream signals into electrical signals and outputs them to a downstream signal processor 203. The downstream signal processor 203 receives only a downstream signal destined for its own device and, if the downstream signal is a control signal containing upstream resource allocation information, outputs the signal to an upstream resource allocation controller 204.

The upstream resource allocation controller 204 outputs an upstream-timeslot control signal to an upstream signal processor 205 and an upstream-wavelength control signal to a tunable wavelength laser section 206, in accordance with the upstream resource allocation information designated by the OLT 10. The upstream signal processor 205 allocates timeslot(s) to an upstream signal to transmit, in accordance with an upstream timeslot allocation direction. The tunable wavelength laser section 206 converts the upstream signal output from the upstream signal processor 205 into an optical signal of a designated upstream wavelength λi, in accordance with an upstream wavelength allocation direction. Thus, the optical signal of the upstream wavelength λi is transmitted to the OLT 10 through the MUX/DEMUX 201 at a designated timing.

### 1.4) Advantageous Effects

The OLT 10 and the PON system according to the exemplary embodiment described above can realize efficient bandwidth allocation (maximum throughput) by dynamically changing the allocation of resources (wavelength and time) to downstream signals depending on downstream signal traffic. In other words, dynamic bandwidth allocation (DBA) used in existing PON systems is extended not only to the time axis but also to the wavelength domain, whereby it is possible to achieve optimal resource allocation over a plurality of wavelengths for downstream signals.

### 2. Example

Hereinafter, a detailed description will be given of a PON system, communication device (OLT), and subscriber communication device (ONU) according to an example of the present invention. Note that those blocks having the same functions as the above-described blocks shown in FIGS. 3 to 5 will be denoted by the same reference numerals as in FIGS. 3 to 5, and a description thereof will be simplified.

### 2.1) System

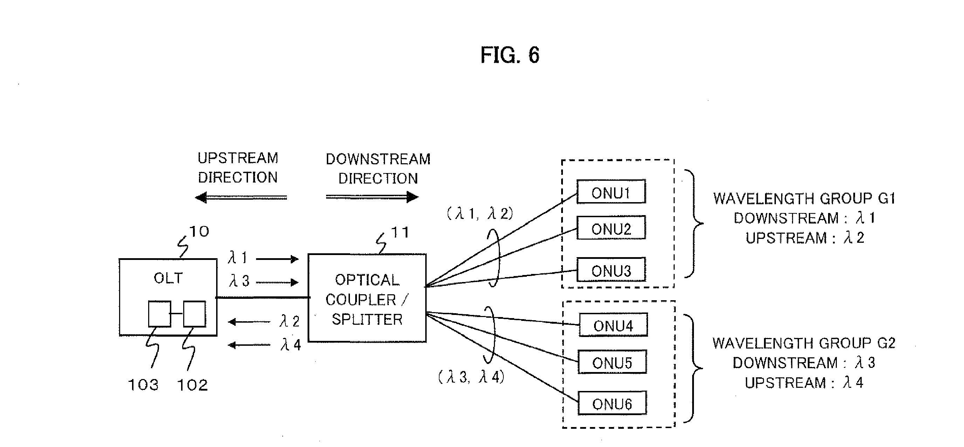

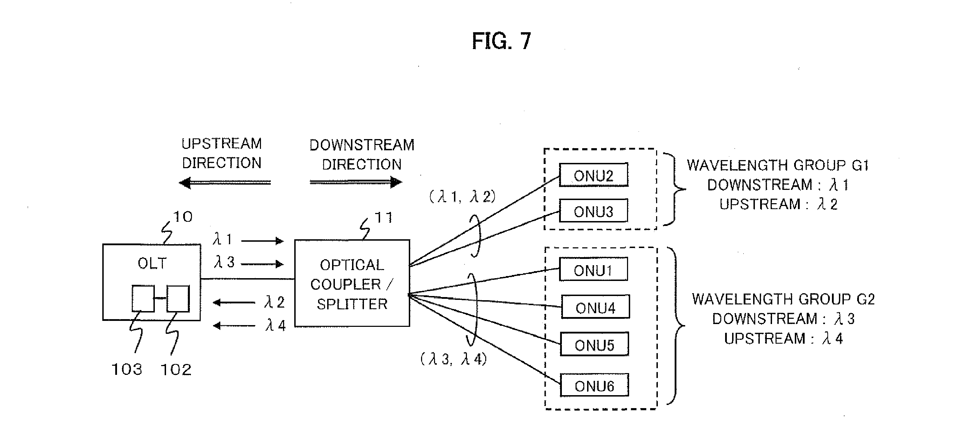

Here, to avoid complicating the description, it is assumed that one OLT 10 is optically connected to six ONUs 1 to 6 through an optical coupler/splitter 11 and optical transmission lines and that four wavelengths λ1 to λ4 are used in the entire system, as shown in FIGS. 6 and 7.

An example of the PON system as depicted in FIG. 6 shows a state where the wavelengths λ1 and λ3 are allocated for downstream (from OLT to ONU) signals and the wavelengths λ2 and λ4 are allocated for upstream (from ONU to OLT) signals. The OLT 10, as described earlier, monitors downstream signal traffic destined for each ONU and assigns wavelength groups to the downstream signals for the ONUs in such a manner that the system bandwidth can be used most efficiently.

Referring to FIG. 6, the ONUs 1 to 3 are grouped to form a wavelength group G1, with the wavelength λ1 allocated for downstream signals and the wavelength λ2 allocated for upstream signals. For communications between the ONUs 1 to 3 and OLT 10, TDM is applied using these wavelengths. The ONUs 4 to 6 are grouped to form another wavelength group G2, with the wavelength λ3 allocated for downstream signals and the wavelength λ4 allocated for upstream signals. For communications between the ONUs 4 to 6 and OLT 10, TDM is applied using these wavelengths.

In this state, assuming that the traffic toward the ONUs 2 and 3 relatively increases and the traffic toward the ONUs 1 and 4 to 6 relatively decreases for example, wavelength allocation is changed so that the ONU 1 is relocated into the wavelength group G2 as shown in FIG. 7. That is, the ONUs 2 and 3 having relatively high traffic volumes are grouped into the wavelength group G1, for which the number of TDMed signals is reduced. The ONUs 1 and 4 to 6 having relatively low traffic volumes are grouped into the wavelength group G2, for which the number of TDMed signals is increased.

However, since the upstream traffic and downstream traffic can vary independently of each other in practice, the upstream wavelength groups and downstream wavelength groups may have independent group structures irrelevantly to each other.

### 2.2) OLT

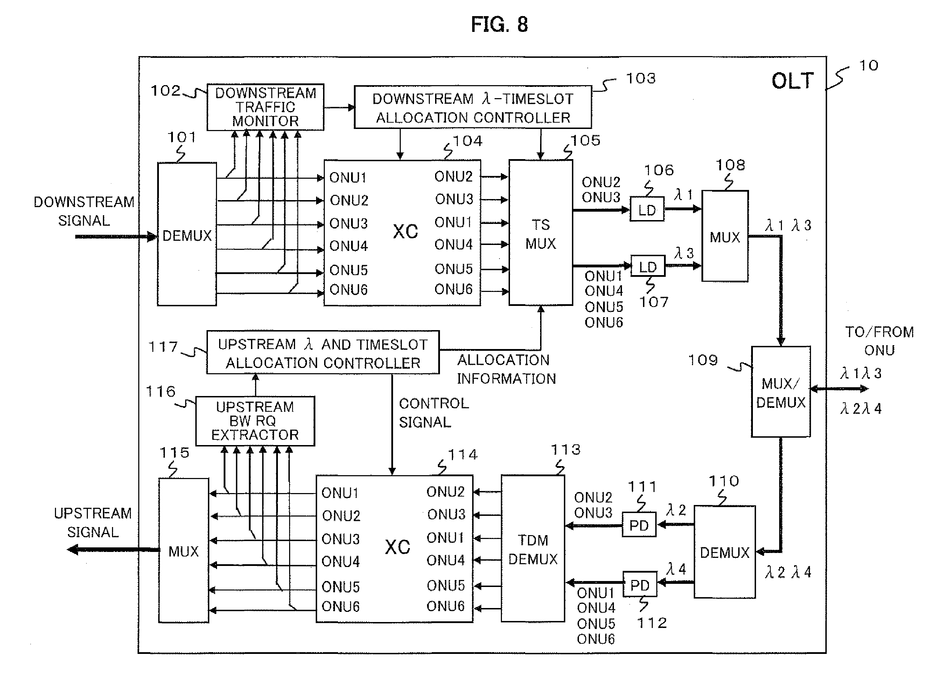

Referring to FIG. 8, a transmission section of the OLT 10 according to the present example includes a demultiplexer (DEMUX) 101, a downstream traffic monitor 102, a downstream wavelength and timeslot allocation controller 103, a cross-connect section 104, a timeslot multiplexer (TS MUX) 105, a plurality of tunable wavelength lasers (LDs: Laser Diodes) 106 and 107, and a wavelength multiplexer (MUX) 108. The DEMUX 101, downstream traffic monitor 102, downstream wavelength and timeslot allocation controller 103, cross-connect section 104, and TS MUX 105 correspond to the DEMUX 101, downstream traffic monitor 102, downstream resource allocation controller 103, grouping section 104, and timeslot allocation section 105 in FIG. 4, respectively, and therefore are denoted by the same reference numerals.

A wavelength multiplexer/demultiplexer (MUX/DEMUX) 109 constitutes an interface section interfacing with the optical transmission line and is connected to the MUX 108 of the transmission section and also to a wavelength demultiplexer (DEMUX) 110 of a reception section.

The reception section of the OLT 10 includes the DEMUX 110, a plurality of photodiodes (PDs) 111 and 112, a demultiplexer (TDM DEMUX) 113, a cross-connect section 114, a multiplexer (MUX) 115, an upstream bandwidth request extractor 116, and an upstream wavelength and timeslot allocation controller 117.

Note that when a pair of a downstream wavelength and an upstream wavelength forms one wavelength group as described above, it is sufficient to perform control such that the cross-connect section 104 for grouping downstream signals and the cross-connect section 114 for dissolving upstream signal groups fall in connection states in the opposite directions to each other. Here, the connection states correspond to the grouping shown in FIG. 7, in which the ONUs 2 and 3 having relatively high traffic volumes are assigned the wavelength group G1 (λ1 and λ2) and the ONUs 1 and 4 to 6 having relatively low traffic volumes are assigned the wavelength group G2 (λ3 and λ4). However, it is also possible to set the downstream and upstream wavelengths independently of each other.

### 2.3) ONU

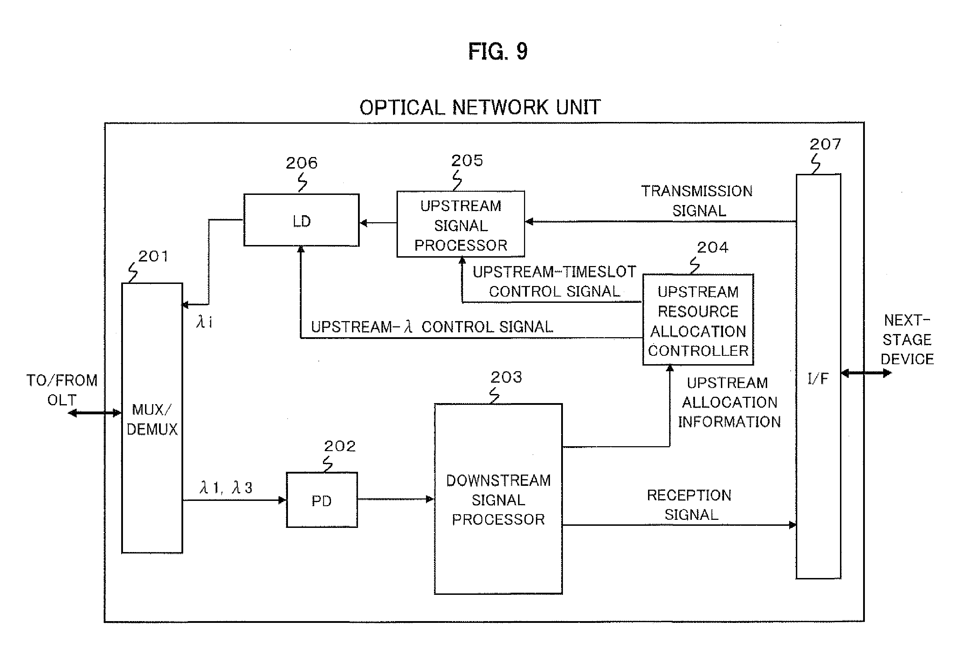

FIG. 9 shows an example of the configuration of the ONU as a subscriber communication device according to the present example. This ONU has basically the same configuration as the ONU shown in FIG. 5, and the only difference is the addition of an interface section 207 interfacing with a next-stage device. Therefore, those blocks having the same functions as the blocks shown in FIG. 5 are denoted by the same reference numerals as in FIG. 5, and a description thereof will be omitted. 2.4) Operation

Next, the operation of the PON system according to the present example will be described in detail with reference to FIGS. 6 to 11.

A description will be given using the group structure shown in FIG. 8. When the OLT 10 inputs a downstream signal from a previous-stage device, the DEMUX 101 demultiplexes the downstream signal into signals (packets, frames, or the like) for individual ONUs. The traffic volume of each signal is monitored by the downstream traffic monitor 102, and the results thereof are notified to the downstream wavelength and timeslot allocation controller 103. The downstream wavelength and timeslot allocation controller 103 determines wavelength and timeslot resources to allocate to the signal toward each ONU in accordance with a predetermined rule (the allocation rule 103a shown in FIG. 4). Then the downstream wavelength and timeslot allocation controller 103 controls the operations of the cross-connect section 104 and TS MUX 105 by using control signals corresponding to the respective determined resources (wavelengths and timeslots). Here, illustrated as an example are the operations when the traffic toward the ONUs 2 and 3 is relatively high and the traffic toward the ONUs 1 and 4 to 6 is relatively low.

Specifically, the cross-connect section 104 interchanges the downstream signals, and the next-stage TS MUX 105 multiplexes the signals toward the ONUs 2 and 3 and similarly multiplexes the signals toward the ONUs 1 and 4 to 6. The multiplex signal toward the ONUs 2 and 3 is input to the LD 106, and the multiplex signal toward the ONUs 1 and 4 to 6 is input to the LD 107. These multiplex signals are individually converted into optical signals of different wavelengths (λ1 and λ3) and then multiplexed by the MUX 108. All the downstream optical signals multiplexed into a single stream by the MUX 108 are output to the optical transmission line through the MUX/DEMUX 109.

When the MUX/DEMUX 109 of the OLT 10 receives an upstream optical signal from ONUs, the DEMUX 110 demultiplexes the upstream optical signal into optical signals of the wavelengths λ2 and λ4 by and then the PDs 111 and 112 convert the optical signals of the wavelengths λ2 and λ4 into electrical signals, respectively. The outputs of the PDs 111 and 112 are further demultiplexed into upstream signals (packets, frames, or the like) from the individual ONUs by the TDM DEMUX 113. The upstream signals from the individual ONUs output from the TDM DEMUX 113 are subject to interchanging at the cross-connect section 114, multiplexed by the MUX 115, and then output to a next-stage device.

The upstream bandwidth request extractor 116 receives as inputs the upstream signals of the individual ONUs output from the cross-connect section 114 and extracts upstream bandwidth request information of each ONU. The upstream wavelength and timeslot allocation controller 117 determines the allocation of upstream wavelengths and timeslots in accordance with the upstream bandwidth requests and predetermined rule and outputs this allocation information to the TS MUX 105 for downstream signals. The TS MUX 105 inserts this allocation information into downstream signals as ONU control information.

Moreover, the interchanging control over upstream signals from ONUs may also be performed independently of downstream signals by using the allocation information as a control signal to the upstream cross-connect section 114. The example in FIG. 8 illustrates the operation when the traffic volumes concerning the ONUs 2 and 3 are relatively high and the traffic volumes concerning the ONUs 1 and 4 to 6 are relatively low as described above. Although FIG. 8 shows a case where the state of upstream traffic is the same as that of downstream traffic as an example, the upstream and downstream traffic can vary independently of each other in practice. Therefore, the upstream and downstream wavelength groups may have independent group structures irrelevantly to each other.

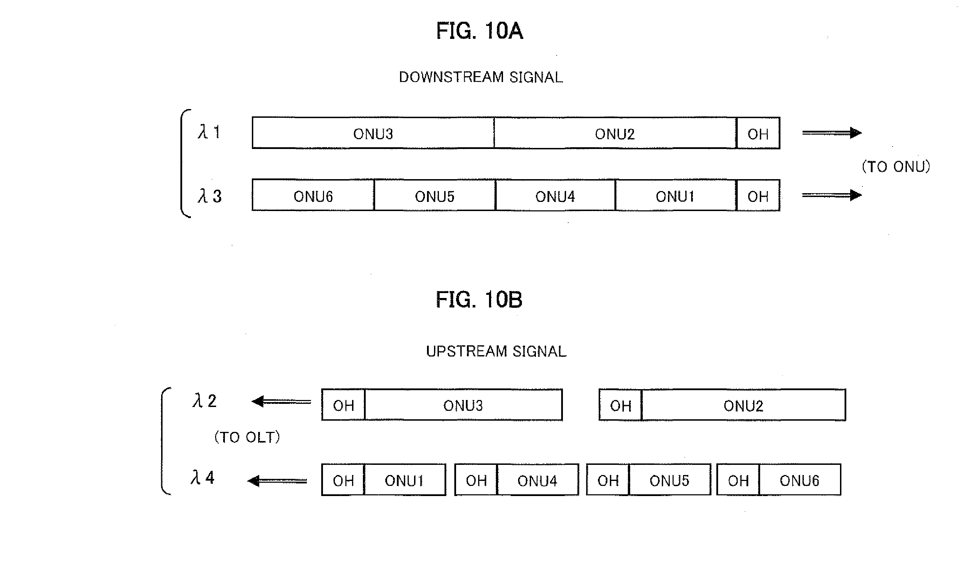

FIGS. 10A and 10B show examples of upstream and downstream frames in the PON system when wavelength allocation is made as shown in FIG. 7 and FIG. 8. In a downstream signal as shown in FIG. 10A, timeslots allocated to the ONUs 2 and 3 following an overhead (OH) are multiplexed in a frame allocated the downstream wavelength λ1, and timeslots allocated to the ONUs 1 and 4 to 6 following an overhead (OH) are multiplexed in a frame allocated the downstream wavelength λ3.

Moreover, in an upstream signal as shown in FIG. 10B, timeslots allocated to the ONU 3 or 2 following an overhead (OH) are multiplexed in a frame allocated the upstream wavelength λ2, and timeslots allocated to the ONU 1, 4, 5, or 6 following an overhead (OH) are multiplexed in a frame allocated the downstream wavelength λ4.

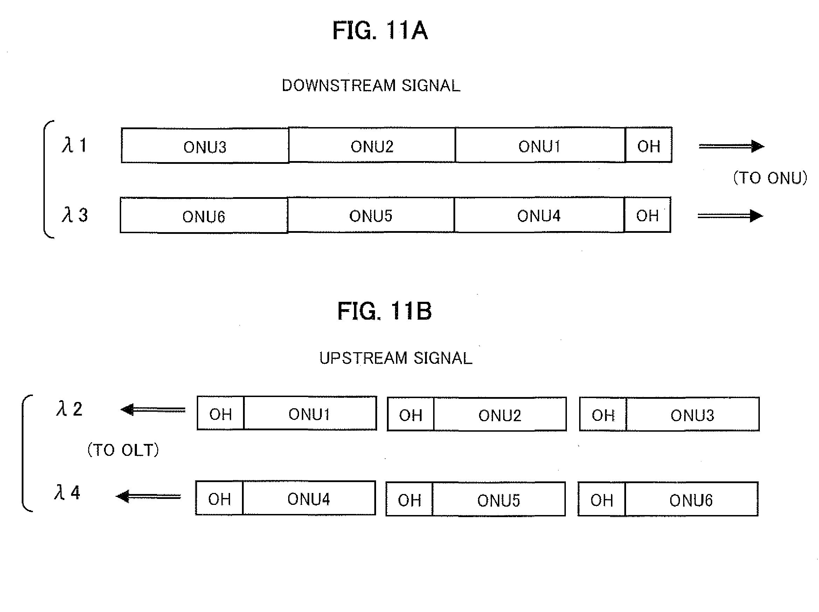

Further, FIGS. 11A and 11B show examples of upstream and downstream frames in the PON system when wavelength allocation is made as shown in FIG. 6 described earlier. Since the ONUs 1 to 3 are grouped into the wavelength group G1 and the ONUs 4 to 6 are grouped into the wavelength group G2 in FIG. 6, almost equal bandwidths are allocated to all of the ONUs in each of a downstream signal and an upstream signal as shown in FIGS. 11A and 11B.

In the present example, the state of downstream traffic and upstream bandwidth requests are monitored at all times. Based on such information, wavelengths and timeslots are dynamically allocated to individual ONUS. Taking the states shown in FIGS. 6 and 7 as an example, the OLT 10 causes a transition from one state to another depending on the state of traffic.

For those ONUs having low traffic volumes, the same wavelength is allocated to as many of these ONUs as possible, thereby increasing the number of TDMed signals and achieving efficient transmission. On the other hand, for those ONUs having high traffic volumes, the number of TDMed signals is reduced so that many timeslots can be allocated to these ONUs. It is also made possible that one ONU exclusively use one wavelength.

The way of allocating wavelengths and timeslots in response to the state of traffic and upstream bandwidth requests is stored beforehand in memory (not shown) as the allocation rule 103a for the OLT 10. Specifically, the upstream wavelength and timeslot allocation controller 117 and downstream wavelength and timeslot allocation controller 103 shown in FIG. 8 store beforehand allocation rule information regarding upstream signals and downstream signals, respectively.

In accordance with the allocation rule information about wavelengths and timeslots stored beforehand as described above, the downstream wavelength and timeslot allocation controller 103 allocates wavelengths and timeslots in downstream signals toward individual ONUs, based on the state of traffic toward each ONU, which is constantly monitored by the downstream traffic monitor 102.

The upstream wavelength and timeslot allocation controller 117 allocates wavelengths and timeslots in upstream signals from individual ONUs in accordance with the allocation rule information about wavelengths and timeslots stored beforehand as described above, based on an upstream bandwidth request from each ONU.

### 2.5) Advantageous Effects

As described above, according to the resource allocation method in the present example, dynamic bandwidth allocation (DBA) generally used in PON systems can be extended not only to the time axis but also to the wavelength domain. Therefore, it is possible to perform more flexible and efficient bandwidth allocation.

According to the present example, the OLT 10 can dynamically change the allocation of wavelengths in downstream signals during operation appropriately depending on the traffic volumes of the respective downstream signals. Therefore, it is possible to realize optimal bandwidth allocation (maximum throughput) in the system.

### 3. Other examples

Note that the present invention is not limited to the above-described embodiment or example and can be implemented in various forms modified based on the technical ideas of the present invention.

For example, in the above-described example, a description is given of a case where ONUs are divided into two wavelength groups, using four wavelengths for upstream and downstream signals. However, the present invention is not limited to the cases using these numbers. The number of wavelengths used for optical signals and the number of wavelength groups assigned may be determined arbitrarily.

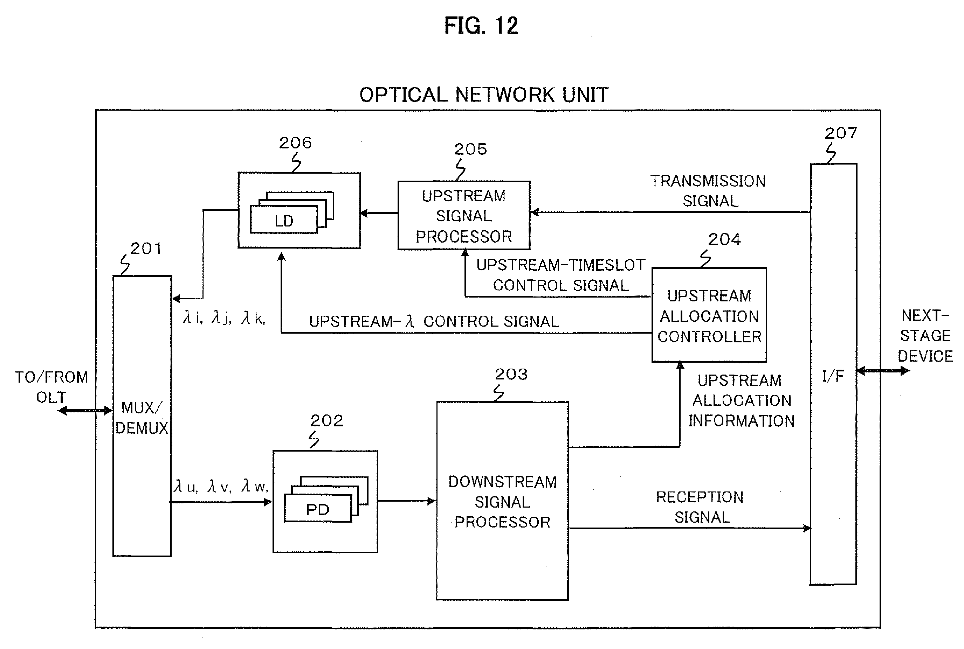

Moreover, in the above-described exemplary embodiment, a description is given assuming that one wavelength is allocated to each of the upstream and downstream signals of one ONU. However, the present invention is not limited to this configuration. It is also possible to make a configuration and method such that a plurality of wavelengths are allocated to each of the upstream and downstream signals of one ONU and the allocation is dynamically changed. FIG. 12 shows an example of such a configuration of an ONU.

In the case of the configuration shown in FIG. 12, the downstream wavelength and timeslot allocation controller 103 and upstream wavelength and timeslot allocation controller 117 of the OLT 10 can allocate one or more wavelengths to the upstream and downstream signals of each ONU, respectively, based on allocation rule information stored beforehand as described above.

According to this configuration example shown in FIG. 12, it is possible to more flexibly and optimally perform bandwidth allocation over different wavelengths through the above-described wavelength allocation.

Moreover, it is also possible to further provide a function of performing wavelength and timeslot allocation not dynamically as in the above-described example but statically, that is, during periods of OLT non-operation, based on information set in advance on the OLT 10. In this case, the downstream wavelength and timeslot allocation controller 103 stores beforehand static allocation rule information about wavelengths and timeslots and, in accordance with this static allocation rule information, allocates wavelengths and timeslots in downstream signals toward individual ONUs.

According to this static allocation function, wavelength allocation can be performed in accordance with the predetermined allocation rule even when the dynamic wavelength allocation according to the above-described example does not function for some reason.

In addition, processing procedures for implementing an OLT as any of the above-described exemplary embodiment and examples are recorded as programs on a recording medium, whereby the above-described functions according to the exemplary embodiment and examples of the present invention can be implemented by causing a CPU of a computer included in the system to execute the processing through the programs provided from the recording medium.

In this case, the present invention is applicable also in cases where an information group including the programs is provided to an output device from the above-mentioned recording medium or an external recording medium through a network. That is, the program codes themselves, read from a recording medium, implement new functions of the present invention, and a recording medium storing the program codes and signals read from the recording medium are included in the present invention.

Examples that can be used for the recording medium include flexible disks, hard disks, optical disks, magnetooptical disks, CD-ROM, CD-R, CD-RW, DVD-ROM, DVD-RAM, DVD-RW, DVD+RW, magnetic tape, nonvolatile memory cards, ROM, and the like.

The programs according to the present invention can make an OLT controlled by the programs implement the functions according to the above-described exemplary embodiment and examples.

### 4. Supplementary Note

The whole or part of the exemplary embodiments disclosed above can be described as, but not limited to, the following supplementary notes.

### (Supplementary note 1)

A communication device for communicating with a plurality of subscriber communication devices using optical signals of a plurality of wavelengths, comprising:
a traffic monitoring section for monitoring a downstream traffic volume of a downstream signal destined for each of the plurality of subscriber communication devices; and
a resource allocating section for allocating a different one of a predetermined number of wavelength resources to each of groups which includes at least one downstream signal grouped according to a predetermined wavelength allocation rule based on its downstream traffic volume.

### (Supplementary note 2)

The communication device according to supplementary note 1, wherein the resource allocating section comprises:
a grouping section for grouping the downstream signals under the predetermined number of wavelength resources according to the predetermined wavelength allocation rule based on their downstream traffic volumes; and
a time-division multiplexing section for time-division-multiplexing at least one downstream signal for each group.

### (Supplementary note 3)

The communication device according to supplementary note 1, the predetermined wavelength allocation rule is to group the downstream signals such that a downstream signal having a larger downstream traffic volume is assigned to a group having a smaller number of downstream signals.

### (Supplementary note 4)

The communication device according to supplementary note 2, the predetermined wavelength allocation rule is to group the downstream signals such that a downstream signal having a larger downstream traffic volume is assigned to a group having a smaller number of downstream signals.

### (Supplementary note 5)

The communication device according to supplementary note 1, the predetermined wavelength allocation rule includes a static allocation rule for statically allocating the predetermined number of wavelength resources to the groups, wherein the resource allocating section determines which one of the wavelength resources is allocated to a downstream signal according to the static allocation rule.

### (Supplementary note 6)

The communication device according to supplementary note 1, the resource allocating section dynamically allocates the predetermined number of wavelength resources to the groups during operation of the communication device.

### (Supplementary note 7)

A method for allocating communication resources to a downstream signal in a communication device which communicates with a plurality of subscriber communication devices using optical signals of a plurality of wavelengths, comprising:
monitoring a downstream traffic volume of a downstream signal destined for each of the plurality of subscriber communication devices; and
grouping the downstream signals under a predetermined number of wavelength resources according to a predetermined wavelength allocation rule based on their downstream traffic volumes; and
allocating a different one of the predetermined number of wavelength resources to each of groups.

### (Supplementary note 8)

The method according to supplementary note 7, further comprising:
time-division-multiplexing at least one downstream signal for each group.

### (Supplementary note 9)

The method according to supplementary note 7, the predetermined wavelength allocation rule is to group the downstream signals such that a downstream signal having a larger downstream traffic volume is assigned to a group having a smaller number of downstream signals.

### (Supplementary note 10)

The method according to supplementary note 8, the predetermined wavelength allocation rule is to group the downstream signals such that a downstream signal having a larger downstream traffic volume is assigned to a group having a smaller number of downstream signals.

### (Supplementary note 11)

The method according to supplementary note 7, the predetermined wavelength allocation rule includes a static allocation rule for statically allocating the predetermined number of wavelength resources to the groups, wherein the resource allocating section determines which one of the wavelength resources is allocated to a downstream signal according to the static allocation rule.

### (Supplementary note 12)

The method according to supplementary note 7, the resource allocating section dynamically allocates the predetermined number of wavelength resources to the groups during operation of the communication device.

### (Supplementary note 13)

A program, stored in a recording medium, for allocating communication resources to a downstream signal in a communication device which communicates with a plurality of subscriber communication devices using optical signals of a plurality of wavelengths, the program comprising:
monitoring a downstream traffic volume of a downstream signal destined for each of the plurality of subscriber communication devices; and
grouping the downstream signals under a predetermined number of wavelength resources according to a predetermined wavelength allocation rule based on their downstream traffic volumes; and
allocating a different one of the predetermined number of wavelength resources to each of groups.

### (Supplementary note 14)

The program according to supplementary note 13, further comprising:
time-division-multiplexing at least one downstream signal for each group.

### (Supplementary note 15)

The program according to supplementary note 13, the predetermined wavelength allocation rule is to group the downstream signals such that a downstream signal having a larger downstream traffic volume is assigned to a group having a smaller number of downstream signals.

### (Supplementary note 16)

The program according to supplementary note 14, the predetermined wavelength allocation rule is to group the downstream signals such that a downstream signal having a larger downstream traffic volume is assigned to a group having a smaller number of downstream signals.

### (Supplementary note 17)

The program according to supplementary note 13, the predetermined wavelength allocation rule includes a static allocation rule for statically allocating the predetermined number of wavelength resources to the groups, wherein the resource allocating section determines which one of the wavelength resources is allocated to a downstream signal according to the static allocation rule.

### (Supplementary note 18)

The program according to supplementary note 13, the resource allocating section dynamically allocates the predetermined number of wavelength resources to the groups during operation of the communication device.

### (Supplementary note 19)

An optical communication system comprising:
a communication device;
a plurality of subscriber communication devices; and
at least one optical coupling and splitting device which connects the communication device to the plurality of subscriber communication devices,
wherein the communication device for communicating with a plurality of subscriber communication devices using optical signals of a plurality of wavelengths, comprising:
a traffic monitoring section for monitoring a downstream traffic volume of a downstream signal destined for each of the plurality of subscriber communication devices; and
a resource allocating section for allocating a different one of a predetermined number of wavelength resources to each of groups which includes at least one downstream signal grouped according to a predetermined wavelength allocation rule based on its downstream traffic volume.

### (Supplementary note 20)

A passive optical network system comprising the optical communication system according to supplementary note 19, wherein the communication device is an optical line terminator (OLT) and each subscriber communication device is an optical network unit (ONU).

The present invention may be embodied in other specific forms without departing from the spirit or essential characteristics thereof. The above-described exemplary embodiment and examples are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A communication device for communicating with a plurality of subscriber communication devices using optical signals of a plurality of wavelengths, **characterized by** comprising:
a traffic monitoring section for monitoring a downstream traffic volume of a downstream signal destined for each of the plurality of subscriber communication devices; and
a resource allocating section for allocating a different one of a predetermined number of wavelength resources to each of groups which includes at least one downstream signal grouped according to a predetermined wavelength allocation rule based on its downstream traffic volume.

2. The communication device according to claim 1, wherein the resource allocating section comprises:
a grouping section for grouping the downstream signals under the predetermined number of wavelength resources according to the predetermined wavelength allocation rule based on their downstream traffic volumes; and
a time-division multiplexing section for time-division-multiplexing at least one downstream signal for each group.

3. The communication device according to claim 1 or 2, the predetermined wavelength allocation rule is to group the downstream signals such that a downstream signal having a larger downstream traffic volume is assigned to a group having a smaller number of downstream signals.

4. The communication device according to one of claims 1-3, the predetermined wavelength allocation rule includes a static allocation rule for statically allocating the predetermined number of wavelength resources to the groups, wherein the resource allocating section determines which one of the wavelength resources is allocated to a downstream signal according to the static allocation rule.

5. The communication device according to one of claims 1-3, the resource allocating section dynamically allocates the predetermined number of wavelength resources to the groups during operation of the communication device.

6. A method for allocating communication resources to a downstream signal in a communication device which communicates with a plurality of subscriber communication devices using optical signals of a plurality of wavelengths, **characterized by** comprising:
monitoring a downstream traffic volume of a downstream signal destined for each of the plurality of subscriber communication devices; and
grouping the downstream signals under a predetermined number of wavelength resources according to a predetermined wavelength allocation rule based on their downstream traffic volumes; and
allocating a different one of the predetermined number of wavelength resources to each of groups.

7. The method according to claim 6, further comprising:
time-division-multiplexing at least one downstream signal for each group.

8. The method according to claim 6 or 7, the predetermined wavelength allocation rule is to group the downstream signals such that a downstream signal having a larger downstream traffic volume is assigned to a group having a smaller number of downstream signals.

9. A program, stored in a recording medium, for allocating communication resources to a downstream signal in a communication device which communicates with a plurality of subscriber communication devices using optical signals of a plurality of wavelengths, the program **characterized by** comprising:
monitoring a downstream traffic volume of a downstream signal destined for each of the plurality of subscriber communication devices; and
grouping the downstream signals under a predetermined number of wavelength resources according to a predetermined wavelength allocation rule based on their downstream traffic volumes; and
allocating a different one of the predetermined number of wavelength resources to each of groups.

10. The program according to claim 9, further comprising:
time-division-multiplexing at least one downstream signal for each group.
